# EUROPEAN PATENT SPECIFICATION

(11) **EP 2 541 933 B1**
(45) Date of publication and mention of the grant of the patent: **01.08.2018**
(21) Application number: 12165232.5
(22) Date of filing: 23.04.2012
(51) Int. Cl.: H04N 7/18, G08B 13/196

(54) **Assembly and connection device of a video door entry system monitor**
Anordnungs- und Anschlussvorrichtung für einen Videotüreingangssystemmonitor
Ensemble et dispositif de connexion d'un moniteur de système d'entrée de porte vidéo

(30) Priority: 30.06.2011 ES 201130706 U
(43) Date of publication of application: 02.01.2013
(73) Proprietor: Fermax Design & Development, S.L.U., 46017 Valencia (ES)
(72) Inventor: Ferrer Zaera, Carlos, 46017 VALENCIA (ES); Perez Suau, Ricardo, 46017 VALENCIA (ES)
(74) Representative: Isern Patentes y Marcas S.L.

(56) References cited:
- EP-A1- 2 107 767
- GB-A- 2 435 979

## Description

### OBJECT OF THE INVENTION

The present invention, such as expressed in the statement of this specification, relates to an assembly and connection device of a video door entry system monitor, this having in principle a screen and a housing, such monitor having characteristic electrical connection means complemented with a connection box located in a hole in a wall. It also has characteristic stable fixation means of the monitor with respect to the wall.

Thus, the novelty of the invention focuses both on the connection means from the monitor with respect to the connection box and in the fixation means of such monitor.

Therefore, the new assembly and connection device facilitates substantially the assembly and connection of the video door entry system monitor.

### BACKGROUND OF THE INVENTION

In the present day, video door entry system monitors that are fixed on a wall through appropriate fixation means are known, including also various connections between the monitor and a connection box integrated in the own wall where the aforementioned monitor is fixed.

EP 2 107 767 A1 discloses an intercom device with wall mounted housing details.

### DESCRIPTION OF THE INVENTION

The scope of the invention is defined by its claims.

The assembly and connection device of a video door entry system monitor has in principle a screen and a housing, the monitor including first connection means for receiving the energy and the communication signals through complementary second connection means established in correspondence with a wall, being also included fixation means of the monitor in a stable position.

On this premise, the device of the invention is characterized in that the first connection means comprise a single front connector that protrudes outward with respect to the rear side of the housing of the monitor, which front connector is plugged in a rear connector constituent of the second connection means, this second connector being integrated into a standard connection box arranged in correspondence with a hole in a wall. The standard box is frontally fixed to a support plate provided with at least one angular flange wherein an anchoring screw is coupled which in turn threads in a part of the housing of the monitor, in correspondence with a groove where said angular flange is housed. The angular flange and anchoring screw constitute the fixation means of the monitor assembly.

Another feature of the invention is that the front and rear connectors have at least one male element and at least one female element complemented to each other as coupling means in relation to each other, in a single relative position between both cited connectors.

In a preferred embodiment, the support plate includes two angular flanges complemented with two grooves of the housing of the monitor and their respective anchoring screws.

Another feature of the invention is that it includes previous guiding means of the correct positioning of the monitor, comprising such means opposing magnetic elements established in the rear side of the housing of the monitor and in the support plate.

It is also characterized in that the rear connector is fixed to a base that is part of the connection box.

Another feature of the invention is that at least one of the anchoring screws is connected to a monitor switch at the end of the tightening of such anchoring screw. When the switch in its active position, provided said active position by the tightening of the aforementioned anchoring screw, detects the presence of the assembled monitor.

Next, in order to facilitate a better understanding of this specification and forming an integral part thereof some figures are accompanied wherein with illustrative character and without limitation, the object of the invention has been represented.

### BRIEF DESCRIPTION OF THE DRAWINGS

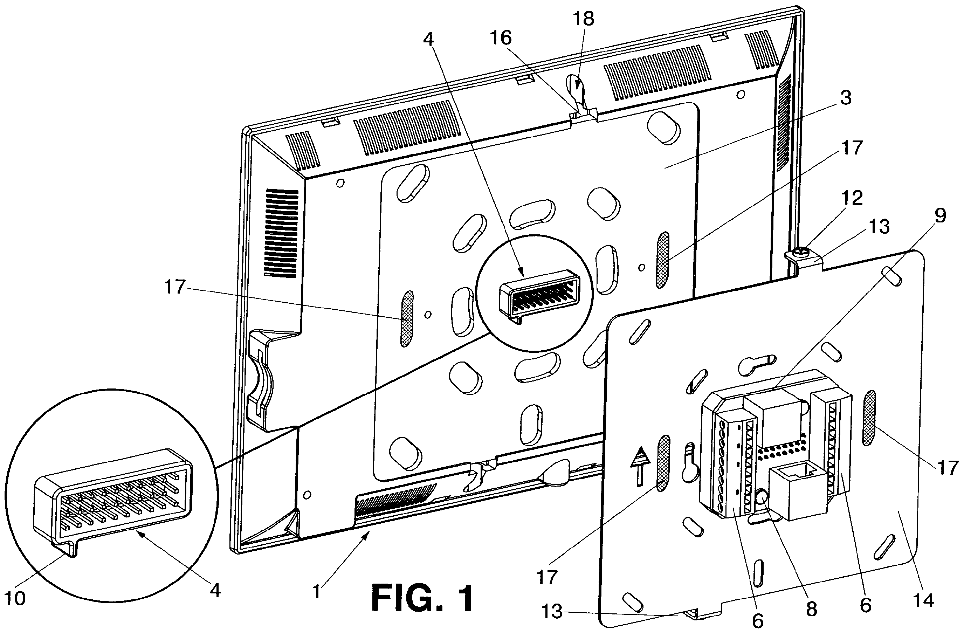

**Figure 1****.-** It shows an exploded perspective view of a video door entry system monitor that includes a single front connector which is plugged in a rear connector integrated in a connection box located in a hole in a wall. In turn, it is also included a support plate with angular flanges, through which the monitor is fixed with the help of screws, constituting such connectors and flanges the assembly and connection device of a video door entry system monitor, object of the invention.

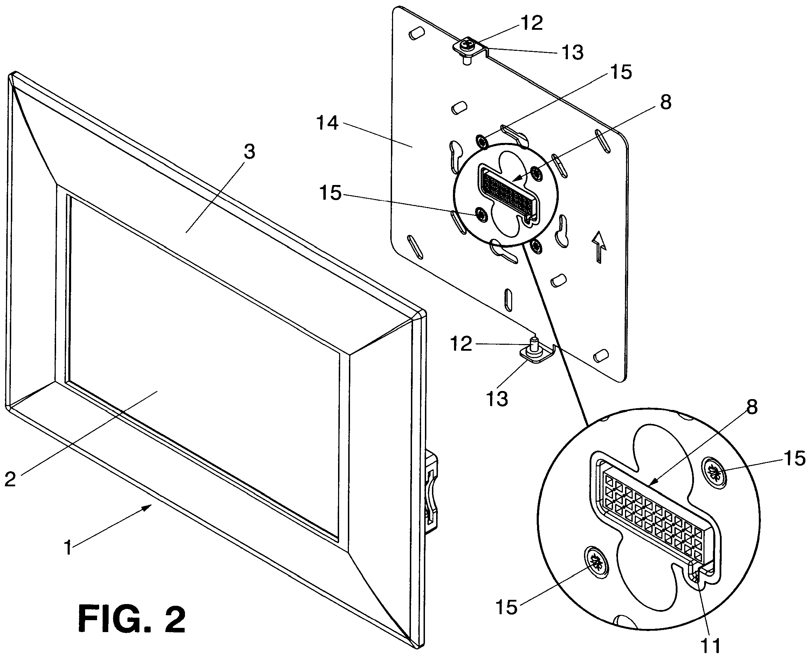

**Figure 2****.-** It shows another exploded perspective view of what is represented in the previous figure.

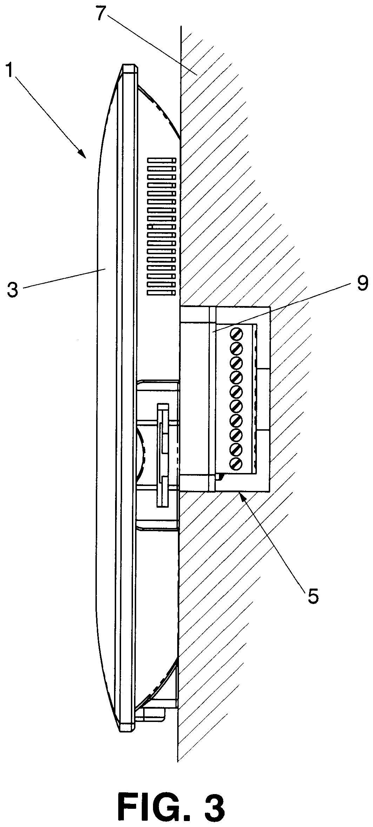

**Figure 3****.-** It shows a plant view of what is represented in the previous figures, with the difference that in this figure 3 the assembly is mounted.

### DESCRIPTION OF AN EXAMPLE OF EMBODIMENT OF THE INVENTION

Considering the numbering adopted in the figures, the assembly and connection device of a video door entry system monitor envisages the following nomenclature used in the description:
1.- Monitor
2.- Screen
3.- Housing
4.- Front connector
5.- Connection box
6.- Connection cards
7.-Wall
8.- Rear connector
9.- Base
10.- Male element
11.- Female element
12.- Anchoring screws
13.- Angular flanges
14.- Support plate
15.- Front screws
16.- Switch
17.- Magnetic elements
18.- Grooves.

It comprises a video door entry system monitor 1 consisting of a touch screen 2 and a housing 3, which integrates in correspondence with its rear side a single front connector 4 protruding outwards that groups all the connections in that single front connector 4 connectable in a connection box 5, which means that the thickness of such monitor 1 can be reduced to the maximum, since the thickness of connection cards 6, usually used for installation cables, are located in correspondence with a wall 7, within said connection box 5.

The front connector 4 protrudes from the rear side of the housing 3 of the monitor 1 sufficiently so to allow a comfortable coupling to a wall rear connector 8 located on the above-mentioned connection box 5. Such rear connector 8 together with the connection cards 6, these elements are supported in a base 9 integrated in the own connection box 5.

To avoid inverted mounting, centering and coupling means which consist of a male element 10 included in the front connector 4 and a female element 11 located on the wall rear connector 8 are arranged, so that such male 10 and female 11 elements ensure a unique correct positioning of the monitor 1.

On the other hand, to ensure the correct assembly of the monitor 1 two small anchoring screws 12 will be used coupled in angular flanges 13 of a support plate 14 for assembly to the wall 7. The support plate 14 is fixed to the connection box 5 through front screws 15.

At least one of the anchoring screws 12, once tight will act on a switch 16 located in the own monitor 1, to detect the tightening of at least one of the aforementioned anchoring screws 12 coupled in the respective angular flanges 13 of the support plate 14, and it can thus discriminate the existence or not of a monitor 1 or its violability. In turn, the angular flanges 13 of the support plate 14 are housed in grooves 18 located in the housing 3 of the monitor 1.

In an embodiment, such switch 16 is electric.

It should be noted that these video door entry systems are often integrated with domestic or alarm systems.

The assembly device of the invention also includes guiding means for the correct positioning of the monitor 1, with the purpose of simplifying the assembly by the technician. Specifically said guiding means are magnetic elements 17 which can be placed either in the housing 2 of the monitor 1 and in the support plate 14, all this so that when the monitor 1 is approximated over the framework where it should be mounted, a prior positioning by magnetic attraction of the same is achieved, correctly.

Subsequently to said prior placement, the assembler should only press to join the two complementary connectors: front 4 and rear 8, so that then proceeding to the tightening of the pair of anchoring screws 12 coupled in correspondence with the angular flanges 13 of the support plate 14.

## Claims

1. Assembly and connection device of a video door entry system monitor, the monitor having a screen and a housing, incorporating the aforementioned monitor first connection means to receive the energy and the communication signals through complementary second connection means established in correspondence with a wall, including also fixation means of the monitor in a stable position, **characterized in that**:
- the first connection means comprise a single front connector (4) protruding outwards with respect to the rear side of the housing (3) of the monitor (1),
- the second connection means comprise a rear connector (8), this rear connector (8) being integrated in a connection box (5) arranged embedded in a hole in a wall (7), being frontally fixed to said connection box (5) a support plate (14) provided with at least one angular flange (13) wherein an anchoring screw (12) that threads in turn in one part of the housing (3) of the monitor (1) is coupled, in correspondence with a groove (18) of such housing (3) where said angular flange (13) is housed,
- connection cards (6) used for wiring the installation cables are arranged in the connection box (5),
wherein the front connector (4) is plugged in the rear connector (8) remaining the front connector (4) and the rear connector (8) inside the hole of the wall (7).

2. Assembly and connection device of a video door entry system monitor, according to claim 1, **characterized in that** the front (4) and rear (8) connectors have at least one male element (10) and at least one female element (11) complemented to each other, as coupling means in relation to each other, in a single relative position between both connectors (4, 8).

3. Assembly and connection device of a video door entry system monitor, according to any one of the previous claims, **characterized in that** the support plate (14) includes two angular flanges (13) complemented with two grooves (18) of the housing (3) of the monitor (1).

4. Assembly and connection device of a video door entry system monitor, according to claim 1, **characterized in that** it includes previous guiding means of the correct positioning of the monitor(1), comprising such means opposing magnetic elements (17) and established in the rear side of the housing (3) and in the support plate(14).

5. Assembly and connection device of a video door entry system monitor, according to claim 1, **characterized in that** the rear connector (8) is fixed to a base (9) that forms part of the connection box (5).

6. Assembly and connection device of a video door entry system monitor, according to claim 1, **characterized in that** at least one of the anchoring screws (12) connects with a switch (16) of the monitor at the end of the tightening of such anchoring screw (12), which switch (16) in its active position detects the presence of the assembled monitor (1).

7. Assembly and connection device of a video door entry system monitor, according to claim 6, **characterized in that** the switch (16) provides an electrical signal in its active position when the anchoring screw makes contact with the switch (16).

## Patentansprüche

1. Montage- und Verbindungsvorrichtung eines Türsprechanlagen-Videomonitors, wobei der Monitor einen Bildschirm und ein Gehäuse aufweist, wobei der oben erwähnte Monitor erste Verbindungsmittel aufweist, um die Energie und die Kommunikationssignale durch komplementäre zweite Verbindungsmittel zu empfangen, die in Übereinstimmung mit einer Wand eingerichtet sind, einschließlich auch Befestigungsmitteln des Monitors in einer stabilen Position, **dadurch gekennzeichnet, dass**:
- die ersten Verbindungsmittel einen einzigen vorderen Verbinder (4) umfassen, der bezüglich der Rückseite des Gehäuses (3) des Monitors (1) nach außen hervorsteht,
- die zweiten Verbindungsmittel einen hinteren Verbinder (8) umfassen, wobei dieser hintere Verbinder (8) in einem Verbindungskasten (5) integriert ist, der in einem Loch in einer Wand (7) eingebettet ist, wobei an dem Verbindungskasten (5) eine Trägerplatte (14) frontal befestigt ist, die mit mindestens einem Winkelflansch (13) versehen ist, wobei eine Verankerungsschraube (12), die wiederum in einem Teil des Gehäuses (3) des Monitors (1) verschraubt ist, in Übereinstimmung mit einer Nut (18) eines solchen Gehäuses (3) gekoppelt ist, in dem der Winkelflansch (13) untergebracht ist,
- Verbindungskarten (6), die zum Verdrahten der Installationskabel verwendet werden, in dem Verbindungskasten (5) angeordnet sind,
wobei der vordere Verbinder (4) in den hinteren Verbinder (8) eingesteckt ist und der vordere Verbinder (4) und der hintere Verbinder (8) in dem Loch der Wand (7) verbleiben.

2. Montage- und Verbindungsvorrichtung eines Türsprechanlagen-Videomonitors nach Anspruch 1, **dadurch gekennzeichnet, dass** der vordere (4) und der hintere (8) Verbinder mindestens ein männliches Element (10) und mindestens ein weibliches Element (11) aufweisen, die als Kopplungsmittel in Bezug zueinander in einer einzigen relativen Position zwischen den beiden Verbindern (4, 8) miteinander komplementiert sind.

3. Montage- und Verbindungsvorrichtung eines Türsprechanlagen-Videomonitors nach einem der vorhergehenden Ansprüche, **dadurch gekennzeichnet, dass** die Trägerplatte (14) zwei Winkelflansche (13) aufweist, die mit zwei Nuten (18) des Gehäuses (3) des Monitors (1) komplementiert sind.

4. Montage- und Verbindungsvorrichtung eines Türsprechanlagen-Videomonitors nach Anspruch 1, **dadurch gekennzeichnet, dass** sie vorherige Führungsmittel der korrekten Positionierung des Monitors (1) umfasst, wobei solche Mittel gegenüberliegende magnetische Elemente (17) umfassen und in der Rückseite des Gehäuses (3) und in der Trägerplatte (14) eingerichtet sind.

5. Montage- und Verbindungsvorrichtung eines Türsprechanlagen-Videomonitors nach Anspruch 1, **dadurch gekennzeichnet, dass** der hintere Verbinder (8) an einer Basis (9) befestigt ist, die einen Teil des Verbindungskastens (5) bildet.

6. Montage- und Verbindungsvorrichtung eines Türsprechanlagen-Videomonitors nach Anspruch 1, **dadurch gekennzeichnet, dass** mindestens eine der Verankerungsschrauben (12) mit einem Schalter (16) des Monitors am Ende des Anziehens einer solchen Verankerungsschraube (12) verbunden ist, wobei der Schalter (16) in seiner aktiven Position die Gegenwart des montierten Monitors (1) erkennt.

7. Montage- und Verbindungsvorrichtung eines Türsprechanlagen-Videomonitors nach Anspruch 6, **dadurch gekennzeichnet, dass** der Schalter (16) ein elektrisches Signal in seiner aktiven Position bereitstellt, wenn die Verankerungsschraube den Schalter (16) kontaktiert.

## Revendications

1. Dispositif d'assemblage et de connexion d'un moniteur de portier vidéo, le moniteur ayant un écran et un boîtier, incorporant les premiers moyens de connexion du moniteur susmentionné pour recevoir l'énergie et les signaux de communication à travers les deuxièmes moyens de connexion complémentaires établis en correspondance avec un mur, comportant également des moyens de fixation du moniteur dans une position stable, **caractérisé en ce que** :
- les premiers moyens de connexion comprennent un unique connecteur avant (4) dépassant vers l'extérieur par rapport à la face arrière du boîtier (3) du moniteur (1),
- les deuxièmes moyens de connexion comprennent un connecteur arrière (8), ce connecteur arrière (8) étant intégré à une boîte de connexion (5) disposée encastrée dans un trou dans un mur (7), une plaque de support (14) étant fixée par l'avant à ladite boîte de connexion (5) et pourvue d'au moins un rebord angulaire (13) dans lequel une vis d'ancrage (12) qui est filetée à son tour dans une partie du boîtier (3) du moniteur (1) est couplée, en correspondance avec une encoche (18) dudit boîtier (3) où est logé ledit rebord angulaire (13),
- des fiches de connexion (6) utilisées pour raccorder les câbles d'installation sont disposées dans la boîte de connexion (5),
dans laquelle le connecteur avant (4) est branché au connecteur arrière (8) le connecteur avant (4) et le connecteur arrière (8) restant à l'intérieur du trou du mur (7).

2. Dispositif d'assemblage et de connexion d'un moniteur de portier vidéo, selon la revendication 1, **caractérisé en ce que** les connecteurs avant (4) et arrière (8) ont au moins un élément mâle (10) et un élément femelle (11) complémentaires entre eux, comme moyens de couplage entre eux, dans une position relative unique entre les deux connecteurs (4, 8).

3. Dispositif d'assemblage et de connexion d'un moniteur de portier vidéo, selon l'une quelconque des revendications précédentes, **caractérisé en ce que** la plaque de support (14) comporte deux rebords angulaires (13) complétés par deux encoches (18) du boîtier (3) du moniteur (1).

4. Dispositif d'assemblage et de connexion d'un moniteur de portier vidéo, selon la revendication 1, **caractérisé en ce qu'**il comporte les précédents moyens de guidage de positionnement correct du moniteur (1), lesdits moyens comprenant des éléments magnétiques opposés (17) et établis sur la face arrière du boîtier (3) et sur la plaque de support (14).

5. Dispositif d'assemblage et de connexion d'un moniteur de portier vidéo, selon la revendication 1, **caractérisé en ce que** le connecteur arrière (8) est fixé à une base (9) faisant partie de la boîte de connexion (5).

6. Dispositif d'assemblage et de connexion d'un moniteur de portier vidéo, selon la revendication 1, **caractérisé en ce qu'**au moins l'une des vis d'ancrage (12) est connectée à un interrupteur (16) du moniteur à l'extrémité du serrage de ladite vis d'ancrage (12), interrupteur (16) qui dans sa position active détecte la présence du moniteur assemblé (1).

7. Dispositif d'assemblage et de connexion d'un moniteur de portier vidéo, selon la revendication 6, **caractérisé en ce que** l'interrupteur (16) émet un signal électrique dans sa position active lorsque la vis d'ancrage est en contact avec l'interrupteur (16).
